# EUROPÄISCHE PATENTANMELDUNG

(11) **EP 2 006 984 A1**
(43) Veröffentlichungstag der Anmeldung: **24.12.2008**
(21) Anmeldenummer: 07010973.1
(22) Anmeldetag: 04.06.2007
(51) Int. Cl.: H02M 3/335

(54) **Schaltnetzteil**

(71) Anmelder: SIEMENS AKTIENGESELLSCHAFT, 80333 München (DE)
(72) Erfinder: Cyron, Michael, 76187 Karlsruhe (DE); Kort, Valentin, 76829 Landau (DE)

(57) **Zusammenfassung**

Ein Schaltnetzteil mit einem Transformator (1) mit einer auf einem Kern (2) angeordneten Primärwicklung (1a) und Sekundärwicklung (1b) sowie einem ersten Schaltglied (3) zum Schalten einer an die Primärwicklung (1a) angelegten Versorgungsspannung (U_{V}), wobei ein erster Kondensator (4) über eine erste Diode (5) parallel zur Primärwicklung (1a) geschaltet ist, ist dadurch gekennzeichnet, dass parallel zur ersten Diode (5) ein zweites Schaltglied (6) angeordnet ist, welches in Abhängigkeit der Spannung am ersten Kondensator (4) betätigbar ist.

## Beschreibung

Die Erfindung betrifft ein Schaltnetzteil nach dem Oberbegriff des Anspruchs 1, mit einem Transformator mit einer auf einem Kern angeordneten Primärwicklung und Sekundärwicklung sowie einem ersten Schaltglied zum Schalten einer an die Primärwicklung angelegten Versorgungsspannung, wobei ein erster Kondensator über eine erste Diode parallel zur Primärwicklung geschaltet ist.

Ein derartiges Schaltnetzteil ist im Stand der Technik hinlänglich bekannt und ist beispielsweise gemäß einer so genannten Flyback-Topologie oder Flusswandler-Topologie aufgebaut. In der Regel ist das erste Schaltglied ein Schalttransistor, der dazu dient, die Versorgungsspannung in hochfrequente Impulse zu zerhacken, um diese über den Transformator auf ein anderes Spannungsniveau zu wandeln. Da am Schalttransistor von außen eingespeiste oder intern aufgrund der physikalischen Eigenschaften der im Schaltnetzteil verwendeten Bauelemente, wie beispielsweise aufgrund einer parasitären Streuinduktivität des Transformators, entstandene Spannungsspitzen auftreten können, muss der Schalttransistor gegen Spannungsspitzen zuverlässig geschützt sein.

Insbesondere die in Schaltnetzteilen beim Sperren des Schalttransistors aufgrund der Streuinduktivität des Transformators entstehenden Spannungsspitzen am Schalttransistor sind problematisch. Die Größe dieser so genannten Spikes sind abhängig von der Streuinduktivität und tragen zu den Verlusten des Schaltnetzteils bei. Auch können die Spikes zu einer Überbelastung, im ungünstigsten Fall zur Zerstörung des Schalttransistors führen. Um dies zu vermeiden, müssen die Spikes bedämpft werden.

Zur Dämpfung dieser Spikes ist es bekannt, so genannte Snubber zu verwenden, welche aus einem Widerstand-Kondensator-Diode-Netzwerk bestehen. Der Kondensator und der Widerstand sind parallel angeordnet und über die Diode parallel zur Induktivität geschaltet. Bei der Verwendung derartiger Snubber entstehen jedoch zusätzliche Verluste, welche in Wärme umgesetzt werden. Diese Wärme muss über große Bauteile an die Umgebung abgeführt werden.

Es sind daher Snubber entwickelt worden, welche einen als integrierten Schaltkreis (IC) ausgebildeten Regler (Active Clamp) haben, mittels dem ein zweites Schaltglied steuerbar ist, mittels welchem ein Kondensator parallel zur Induktivität schaltbar ist. Beim Auftreten eines Spikes wird das zweite Schaltglied geschlossen, wodurch der Spike durch den Kondensator bedämpft wird. Die Kosten des Reglers sind jedoch relativ hoch, da der Regler sehr präzise arbeiten muss. Des Weiteren benötigt der Regler relativ viel Platz und erfordert eine komplexe Schaltungstechnik.

Es ist Aufgabe der Erfindung, ein eingangs genanntes Schaltnetzteil derart auszubilden, dass das erste Schaltglied auf einfache Weise und zuverlässig gegen Spannungsspitzen geschützt ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Schaltnetzteil mit einem Transformator, mit einer auf einem Kern angeordneten Primärwicklung und Sekundärwicklung sowie einem ersten Schaltglied zum Schalten einer an die Primärwicklung angelegten Versorgungsspannung, wobei ein erster Kondensator über eine erste Diode parallel zur Primärwicklung geschaltet ist, dadurch gekennzeichnet, dass parallel zur ersten Diode ein zweites Schaltglied angeordnet ist, welches in Abhängigkeit der Spannung am ersten Kondensator betätigbar ist.

Bei dem erfindungsgemäßen Schaltnetzteil wird die in einem Spike enthaltene Energie in gleicher Weise wie im Stand der Technik über die erste Diode in den ersten Kondensator geleitet, wodurch das erste Schaltglied geschützt ist. Dadurch, dass parallel zur ersten Diode ein zweites Schaltglied angeordnet ist, welches in Abhängigkeit der Spannung am ersten Kondensator betätigbar ist, wird jedoch die in den ersten Kondensator eingeleitete Energie nicht als Verlustleistung in Wärme umgesetzt, sondern wieder dem Transformator zugeführt, wodurch sie an einen an die Sekundärwicklung des Transformators angeschlossenen Verbraucher geleitet wird. Mit anderen Worten, die beim Auftreten eines Spikes in den ersten Kondensator geleitete Ladung wird vom ersten Kondensator über das zweite Schaltglied wieder an die Primärwicklung des Transformators abgegeben und nach dem Prinzip eines Flusswandlers auf die Sekundärseite des Transformators übertragen.

Dadurch, dass die in einem Spike enthaltene Energie nicht als Verlustleistung in Wärme umgesetzt wird, sondern wieder an den Transformator abgegeben wird, arbeitet das erfindungsgemäß ausgebildete Schaltnetzteil sehr verlustarm.

Als sehr vorteilhaft hat es sich erwiesen, das zweite Schaltglied als Bipolartransistor auszubilden, dessen Kollektor-Emitter-Strecke parallel zur ersten Diode geschaltet ist. Besonders zweckmäßig ist es hierbei, wenn die Emitter-Basis-Strecke des Bipolartransistors parallel zum ersten Kondensator geschaltet ist.

Durch die Verwendung eines Bipolartransistors lässt sich das zweite Schaltglied auf besonders einfache und zuverlässige Weise realisieren. Durch die Parallelschaltung der Emitter-Basis-Strecke des Bipolartransistors zum ersten Kondensator lässt sich auf einfache Weise erreichen, dass der Transistor immer dann leitend wird, wenn die Energie des Spikes an den ersten Kondensator abgegeben wurde, ohne dass hierzu eine aufwendige Steuerung erforderlich ist.

Sehr vorteilhaft ist es auch, wenn in der Basis-Zuleitung des Bipolartransistors eine Z-Diode angeordnet ist. Durch die Z-Diode wird auf einfache Weise die Schaltschwelle des Bipolartransistors angehoben. Hierdurch wird erreicht, dass der Bipolartransistor nur dann durchgeschaltet ist, wenn die Spannung am ersten Kondensator größer ist als die Zenerspannung der Z-Diode. Durch die Z-Diode kann somit eine vollständige Entladung des ersten Kondensators vermieden werden. Der erste Kondensator wird nur so lange entladen, solange die Spannung am ersten Kondensator größer als die Zenerspannung der Z-Diode ist.

Durch die erfindungsgemäße Schaltungsanordnung kann auf die Verwendung eines aufwendigen und kostenintensiven Regler-ICs verzichtet werden, ohne dass hierdurch der Wirkungsgrad wesentlich verringert würde. Verglichen mit einem passiven Snubber ist der Wirkungsgrad der erfindungsgemäßen Schaltungsanordnung erheblich höher. Des Weiteren kann durch die erfindungsgemäße Schaltungsanordnung auf eine auf dem Transformatorkern aufgebrachte Hilfswicklung verzichtet werden.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: ein erfindungsgemäß ausgebildetes Schaltnetzteil in schematischer Darstellung und
- Fig. 2: den Spannungsverlauf am ersten Kondensator beziehungsweise am ersten Schaltglied.

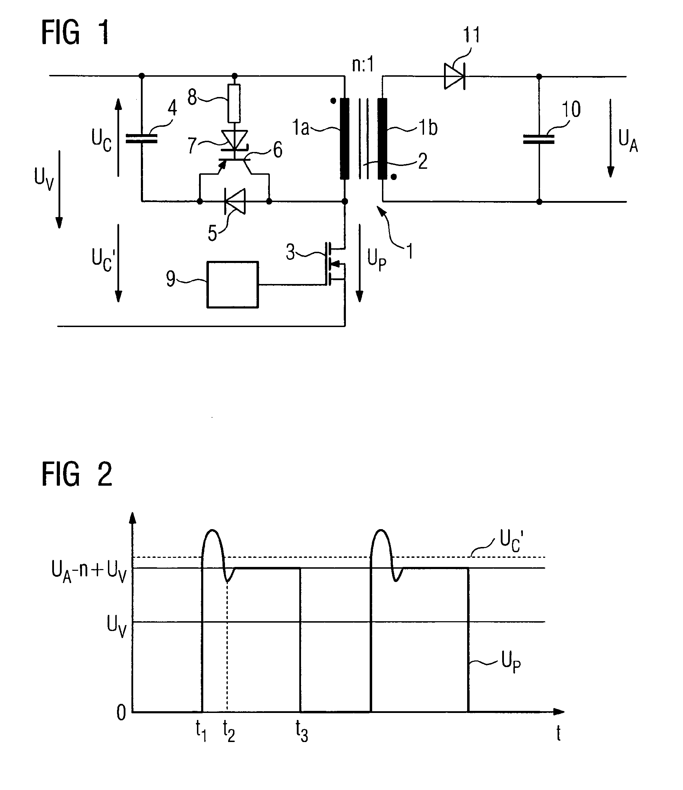

Wie Fig. 1 entnommen werden kann, weist ein Schaltnetzteil, welches hier in der Flyback-Technologie aufgebaut ist, einen Transformator 1 auf, welcher einen Kern 2 aufweist, auf dem eine Primärwicklung 1a und eine Sekundärwicklung 1b angeordnet ist. Der Wickelsinn der Primärwicklung 1a ist entgegengesetzt zum Wickelsinn der Sekundärwicklung 1b, wie dies durch die den Wickelsinn der Wicklungen kennzeichnenden Punkte erkennbar ist.

An die Primärwicklung 1a kann mittels eines als Schalttransistor 3 ausgebildeten ersten Schaltglieds eine Versorgungsspannung U_{V} des Schaltnetzteils angelegt werden. Der Schalttransistor 3 wird von einer Steuerung 9 gesteuert. An der Sekundärwicklung 1b lässt sich über eine zweite Diode 11 eine Ausgangsspannung U_{A} des Schaltnetzteils abnehmen. Parallel zum Ausgang des Schaltnetzteils ist ein zweiter Kondensator 10, an dem somit ebenfalls die Ausgangsspannung U_{A} anliegt, geschaltet.

Dieser Aufbau entspricht dem Aufbau eines herkömmlichen Schaltnetzteils in Flyback-Technologie. Daher ist auch die Steuerung 9 auf herkömmliche Weise ausgebildet und steuert den Schalttransistor 3 auf herkömmliche Weise an.

Das Schaltnetzteil weist des Weiteren einen ersten Kondensator 4 auf, welcher über eine erste Diode 5 parallel zur Primärwicklung 1a des Transformators 1 geschaltet ist. Durch die erste Diode 5 und den ersten Kondensator 4 lassen sich aufgrund von Streuinduktivitäten in der Primärwicklung 1a erzeugte Spannungsspitzen (Spikes) in bekannter Weise dämpfen.

Parallel zur ersten Diode 5 ist ein als pnp-Transistor 6 ausgebildetes zweites Schaltglied geschaltet. Die Emitter-Basis-Strecke des pnp-Transistors 6 ist parallel zum ersten Kondensator 4 angeordnet. In der Basis-Zuleitung des pnp-Transistors 6 sind eine Z-Diode 7 sowie ein ohmscher Widerstand 8 angeordnet. Der pnp-Transistor 6 schaltet somit erst dann, wenn die Spannung am ersten Kondensator 4 größer als die Zenerspannung der Z-Diode 7 ist.

Nachfolgend wird die Funktionsweise der erfindungsgemäßen Schaltung anhand des in Fig. 2 dargestellten Spannungs-Zeitdiagramms beschrieben.

Während der Einschaltphase (Transistor leitet) des Schalttransistors 3 findet über die Primärwicklung 1a ein Energiefluss in den Transformator 1 statt. Wenn der Schalttransistor 3 aufgrund eines Signals der Steuerung 9 ausgeschaltet wird (Transistor leitet nicht), beginnt auf der Sekundärseite ein Strom über die zweite Diode 11 in den zweiten Kondensator 10 beziehungsweise über einen in der Figur nicht dargestellten Verbraucher zu fließen. Dies ist die Funktionsweise des Flyback-Prinzips.

Die am Schalttransistor 3 anliegende Spannung U_{P} ist während der Einschaltphase etwa Null. Wird der Schalttransistor 3 ausgeschaltet (t₁), steigt sie zunächst auf 2·U_{V} + n·U_{A} an, wobei n das Windungsverhältnis der Sekundärwicklung 1b zur Primärwicklung 1a ist.

Der Stromfluss durch die Sekundärwicklung 1b erzeugt aufgrund der Streuinduktivität in der Primärwicklung 1a einen Spannungsimpuls (Spike). Durch den bei der Flyback-Technologie verwendeten Wicklungssinn der Primärwicklung 1a und der Sekundärwicklung 1b ist der Spannungsimpuls phasengleich mit der Ausschaltphase des Schalttransistors 3. Das heißt, geht der Schalttransistor 3 vom leitenden Zustand in den gesperrten Zustand über, entsteht aufgrund der Streuinduktivitäten in der Primärwicklung ein Impuls. Dieser Impuls ist bei der Flyback-Technologie wicklungsbedingt phasengleich mit der Sperrphase des Schalttransistors 3 und erhöht somit die Spannung U_{P} am Schalttransistor 3.

Da beim Übergang des Schalttransistors 3 in die Sperrphase der Strom in der Primärwicklung 1a aufgrund der Streuinduktivitäten zunächst weiterfließen möchte, wird er durch die erste Diode 5 in den ersten Kondensator 4 geleitet. Hierdurch erhöht sich die Ladung des ersten Kondensators 4, wodurch die am ersten Kondensator 4 anliegende Spannung U_{C} ansteigt. Das heißt, die an der Kathode der ersten Diode 5 beziehungsweise dem Emitter des pnp-Transistors 6 anliegende Spannung U_{C}' steigt auf einen Wert, der oberhalb des Wertes der am Schalttransistor 3 anliegenden Spannung liegt.

Da die am ersten Kondensator 4 anliegende Spannung U_{C} größer ist als die Zenerspannung der Z-Diode 7, wird der pnp-Transistor 6 leitend. Hierdurch kann sich der erste Kondensator 4 über die Emitter-Kollektor-Strecke des pnp-Transistors 6 entladen. Das heißt, die betreffende Ladung des ersten Kondensators 4 fließt wieder in den Transformator 1, der diese Energie als Flusswandler an die Sekundärwicklung 1b beziehungsweise einen damit verbundenen Verbraucher abgibt.

Der erste Kondensator 4 kann sich nur so lange entladen, wie der pnp-Transistor 6 leitend ist, das heißt die am ersten Kondensator 4 anliegende Spannung U_{C} größer ist als die Zenerspannung der Z-Diode 7. Durch die Z-Diode 7 ist somit gewährleistet, dass der pnp-Transistor 6 nur während der Dauer eines Spikes leitend ist und sich der erste Kondensator 4 nicht vollständig entladen kann.

Nach Abklingen des Spikes beträgt die am Schalttransistor 3 anliegende Spannung U_{P} wiederum U_{V} + n-U_{A}. Diesen Wert behält sie, bis der Schalttransistor 3 wieder eingeschaltet wird (t₃). Durch Schmutzeffekte fällt die am Schalttransistor 3 anliegende Spannung U_{P} nach Abklingen des Spikes jedoch kurzzeitig unter den genannten Wert.

Da die in dem Spike vorhandene Energie im ersten Kondensator 4 zwischengespeichert wird und danach über den Transformator 1 an den Verbraucher geleitet wird, ist der Wirkungsgrad der erfindungsgemäßen Schaltung verglichen mit einem herkömmlichen Snubber deutlich höher.

## Patentansprüche

1. Schaltnetzteil mit einem Transformator (1) mit einer auf einem Kern (2) angeordneten Primärwicklung (1a) und Sekundärwicklung (1b) sowie einem ersten Schaltglied (3) zum Schalten einer an die Primärwicklung (1a) angelegten Versorgungsspannung (U_{V}), wobei ein erster Kondensator (4) über eine erste Diode (5) parallel zur Primärwicklung (1a) geschaltet ist, **dadurch gekennzeichnet, dass** parallel zur ersten Diode (5) ein zweites Schaltglied (6) angeordnet ist, welches in Abhängigkeit der Spannung am ersten Kondensator (4) betätigbar ist.

2. Schaltnetzteil nach Anspruch 1, **dadurch gekennzeichnet, dass** das zweite Schaltglied (6) ein Bipolartransistor ist, dessen Kollektor-Emitter-Strecke parallel zur ersten Diode (5) geschaltet ist.

3. Schaltnetzteil nach Anspruch 2, **dadurch gekennzeichnet, dass** die Emitter-Basis-Strecke des Bipolartransistors (6) parallel zum ersten Kondensator (4) geschaltet ist.

4. Schaltnetzteil nach Anspruch 3, **dadurch gekennzeichnet, dass** in der Basis-Zuleitung des Bipolartransistors (6) eine Z-Diode (7) angeordnet ist.
